(19)

**Europäisches Patentamt**
**European Patent Office**
**Office européen des brevets**

(11) **EP 4 629 624 A1**

(12) **EUROPEAN PATENT APPLICATION**

(43) Date of publication:
    **08.10.2025   Bulletin 2025/41**

(21) Application number: **24305522.5**

(22) Date of filing: **04.04.2024**

(51) International Patent Classification (IPC):
    **H04N 19/11** (2014.01)      **H04N 19/176** (2014.01)
    **H04N 19/52** (2014.01)      **H04N 19/593** (2014.01)

(52) Cooperative Patent Classification (CPC):
    **H04N 19/147; H04N 19/105; H04N 19/176;**
    **H04N 19/52; H04N 19/593**

(84) Designated Contracting States:
    **AL AT BE BG CH CY CZ DE DK EE ES FI FR GB**
    **GR HR HU IE IS IT LI LT LU LV MC ME MK MT NL**
    **NO PL PT RO RS SE SI SK SM TR**
    Designated Extension States:
    **BA**
    Designated Validation States:
    **GE KH MA MD TN**

(71) Applicant: **InterDigital CE Patent Holdings, SAS**
    **75017 Paris (FR)**

(72) Inventors:
    • **RADOSAVLJEVIC, Milos**
      **35000 RENNES (FR)**

    • **NASER, Karam**
      **35250 MOUAZE (FR)**
    • **CHEN, Ya**
      **35700 RENNES (FR)**
    • **DUMAS, Thierry**
      **35700 RENNES (FR)**

(74) Representative: **Rittner, Karsten**
    **Rittner & Partner**
    **Patentanwälte mbB**
    **Schiffgraben 17**
    **30159 Hannover (DE)**

(54) **RR-IBC HANDLING IN INTRA TEMPLATE MATCHING PREDICTION MERGE MODE**

(57)    Video coding may be performed using reconstruction-reordered intra block copy (RRIBC) handling in intra template matching prediction (ITMP) merge mode. A device (e.g., a decoder) may determine if a neighboring coding unit (CU) is coded in a RRIBC mode. The device may, e.g., based on the determination that the neighboring CU is coded in the RRIBC mode, add an ITMP merge candidate associated with the neighboring CU to an ITMP merge candidate list. The device may flip a template and/or a block associated with the added ITMP merge candidate. For example, the template and/or the block may be flipped using a flipping direction. The device may select, e.g., from the ITMP candidate list, an ITMP candidate. The device may decode a current block using the selected ITMP candidate.

Reference block with conventional template
Vertical flip

Reference block with modified template

Current block with conventional template

Reference block

Current block

Conventional template

Modified template

Flipped reference block

Conventional template

Flipped current block

Flipping

Flipping

Flipping

Flipped template

Flipped template

**FIG. 7**

EP 4 629 624 A1

**Description**

**BACKGROUND**

Video coding systems may be used to compress digital video signals, e.g., to reduce the storage and/or transmission bandwidth needed for such signals. Video coding systems may include, for example, block-based, wavelet-based, and/or object-based systems.

**SUMMARY**

Systems, methods, and instrumentalities are disclosed for performing video coding using reconstruction-reordered intra block copy (RR-IBC) handling in Intra Template Matching Prediction (ITMP) merge mode.

In examples, a device (e.g., a decoder) comprising a processor may be configured to implement a method, which may include one or more of the following. The video coding device may determine if a neighboring coding unit (CU) is coded in a reconstruction-reordered intra block copy (RRIBC) mode. The device may, e.g., based on the determination that the neighboring CU is coded in the RRIBC mode, add an intra template matching prediction (ITMP) merge candidate associated with the neighboring CU to an ITMP merge candidate list. The device may flip a template and/or a block associated with the added ITMP merge candidate. The block may be a current block or a reference block. The template may be associated with the current block or a reference block.

In examples, the template and/or the block may be flipped using a flipping direction. In examples, the device may apply the flipping direction to a refined block that is in the RRIBC mode. The device may generate a second ITMP candidate list from the first ITMP merge candidate list and a sparse candidate list. The device may further refine the second ITMP candidate list to generate a third ITMP candidate list from the refined second ITMP candidate list.

The device may select, e.g., from the third ITMP merge candidate list, an ITMP candidate with the smallest template matching cost. The device may decode a current block using the selected ITMP candidate.

In examples, determining if the neighboring CU is coded in the RRIBC mode may comprise determining if the neighboring CU is coded in the RRIBC mode based on an indicator associated with the neighboring CU. Based on a determination that a neighboring CU is coded in the RRIBC mode, the device may exclude the block vector of neighboring CU from being added to the ITMP merge candidate list.

In examples, the device may flip the template and/or the block during template matching. In examples, the device may rank the ITMP merge candidate list comprising flipped merge candidates and non-flipped merge candidates to generate an ordered ITMP merge candidate list.

**BRIEF DESCRIPTION OF THE DRAWINGS**

FIG. 1A is a system diagram illustrating an example communications system in which one or more disclosed embodiments may be implemented.

FIG. 1B is a system diagram illustrating an example wireless transmit/receive unit (WTRU) that may be used within the communications system illustrated in FIG. 1A according to an embodiment.

FIG. 1C is a system diagram illustrating an example radio access network (RAN) and an example core network (CN) that may be used within the communications system illustrated in FIG. 1A according to an embodiment.

FIG. 1D is a system diagram illustrating a further example RAN and a further example CN that may be used within the communications system illustrated in FIG. 1A according to an embodiment.

FIG. 2 illustrates an example video encoder.

FIG. 3 illustrates an example video decoder.

FIG. 4 illustrates an example of a system in which various aspects and examples may be implemented.

FIG. 5 illustrates an example of an intra template matching search area.

FIG. 6 illustrates an example of a sparse search and a refinement search that may be part of an ITMP process.

FIG. 7 illustrates an example of a vertical flip case.

FIG. 8 illustrates an example of a horizontal flip case.

FIG. 9 illustrates an example of a conventional template for a vertical and horizontal flip case compared with a current block template.

FIG. 10 illustrates an example of using left only and top only templates with application of appropriate flipping of the templates.

FIG. 11 illustrates an example of flipping a reference block to create a prediction.

FIG. 12 Illustrates an example of using a modified template for vertical and horizontal flip cases. Modified template may be taken from the neighboring pixels of the reference block.

FIG. 13 illustrates an example of a modified template with vertical and horizontal flip.

FIG. 14 illustrates an example of modified and conventional template use in case of flipping on the current block side.

FIG. 15 illustrates an example of template matching illustration when a current template is flipped and a conventional template may be used on the reference block side.

FIG. 16 illustrates an example of template matching when a current template is flipped and a modified template is used on the reference block side.

## DETAILED DESCRIPTION

A more detailed understanding may be had from the following description, given by way of example in conjunction with the accompanying drawings.

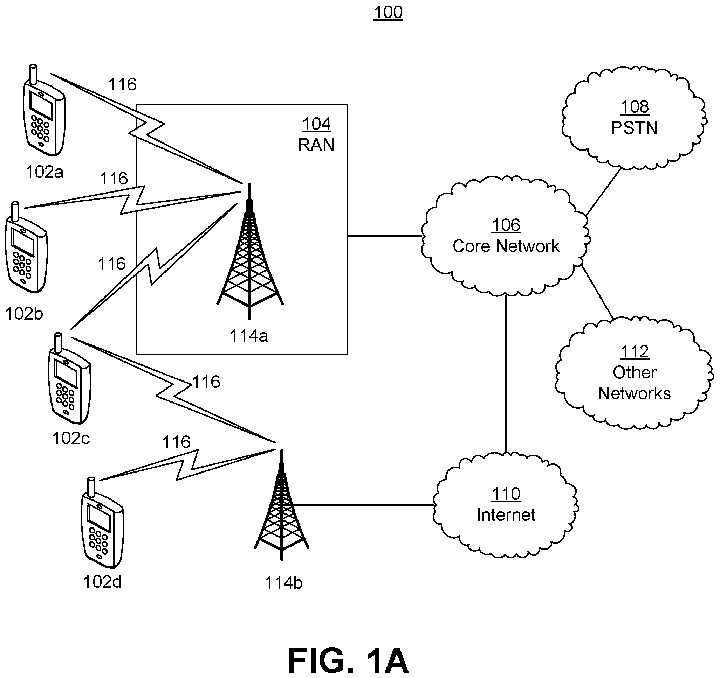

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b may be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access , which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., a eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing a NR radio technology, the CN 106/115 may also be in communication with another RAN (not shown) employing a GSM, UMTS, CDMA 2000, WiMAX, E-UTRA, or WiFi radio technology.

The CN 106/115 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

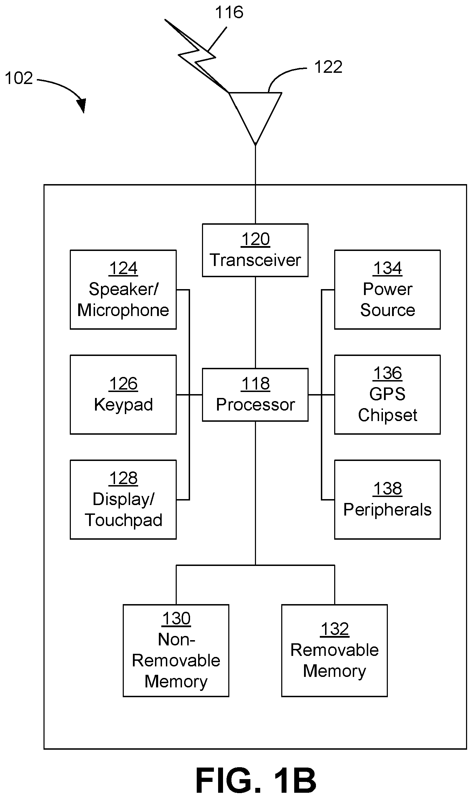

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth® module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the UL (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WRTU 102 may include a half-duplex radio for which transmission and reception of some or all of the signals (e.g., associated with particular subframes for either the UL (e.g., for transmission) or the downlink (e.g., for reception)).

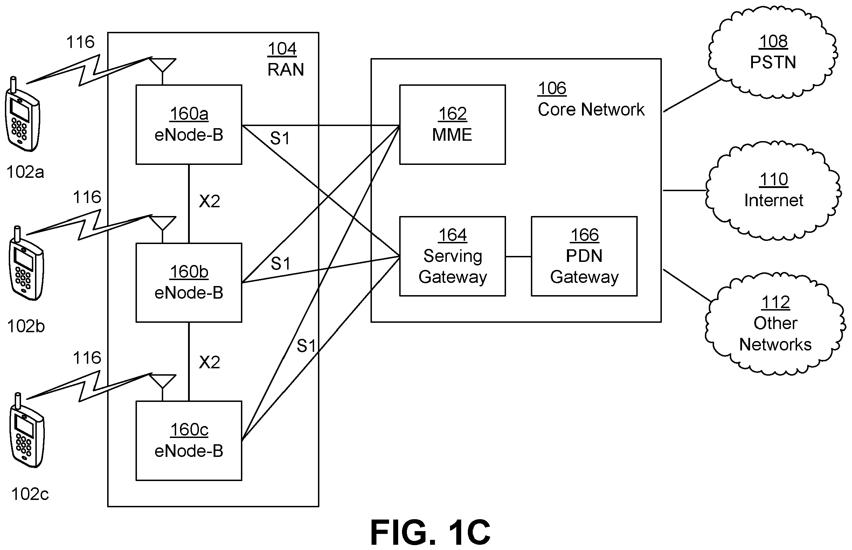

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (or PGW) 166. While each of the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have an access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier Sense Multiple Access with Collision Avoidance (CSMA/CA) may be implemented, for example in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11 af and 802.11ah relative to those used in 802.11n, and 802.11ac. 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications, such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11 ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11 ah is 6 MHz to 26 MHz depending on the country code.

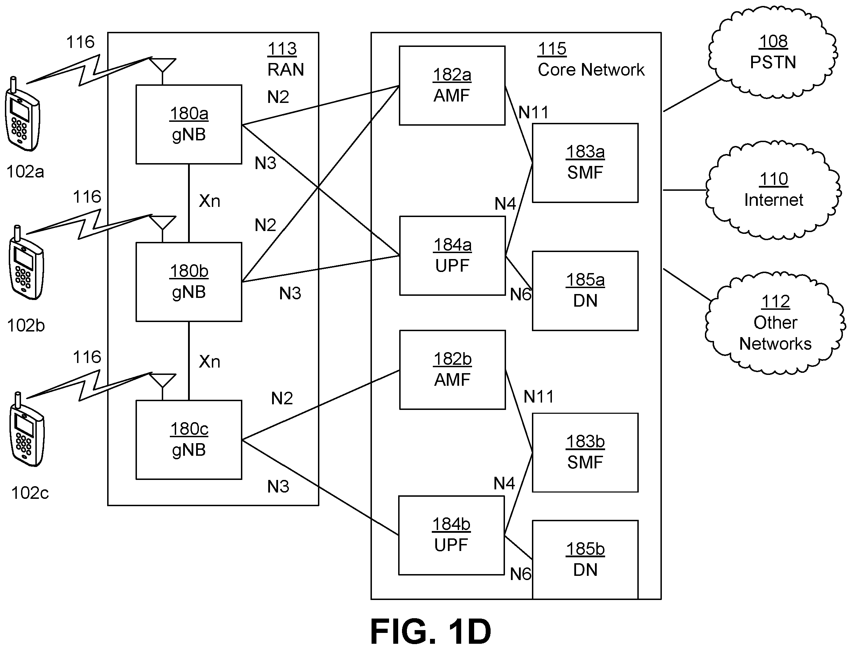

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 115 shown in FIG. 1D may include at least one AMF 182a, 182b, at least one UPF 184a,184b, at least one Session Management Function (SMF) 183a, 183b, and possibly a Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different PDU sessions with different requirements), selecting a particular SMF 183a, 183b, management of the registration area, termination of NAS signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for machine type communication (MTC) access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of Figures 1A-1D, and the corresponding description of Figures 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

This application describes a variety of aspects, including tools, features, examples, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects may be combined and interchanged to provide further aspects. Moreover, the aspects may be combined and interchanged with aspects described in earlier filings as well.

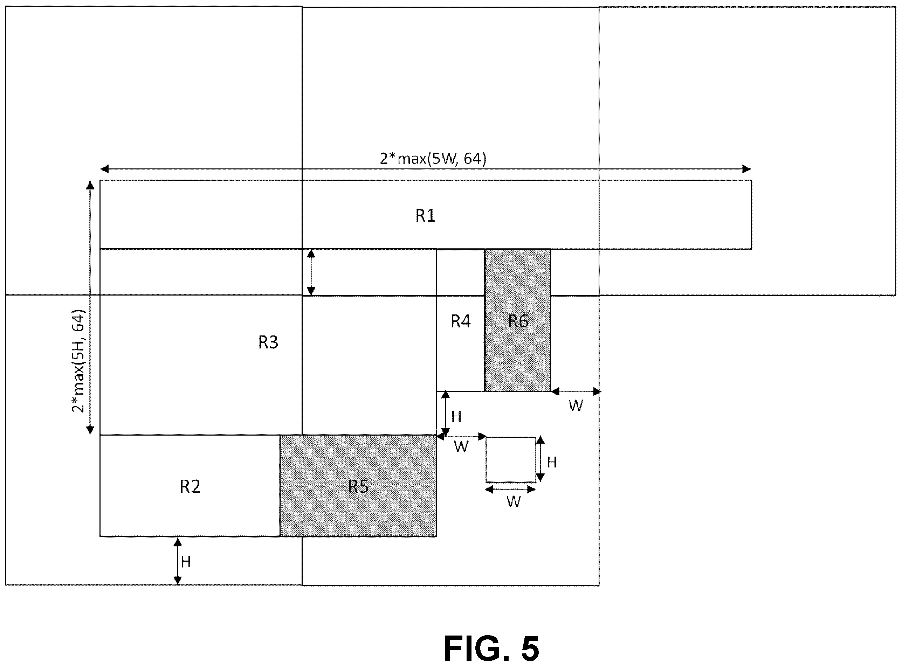

The aspects described and contemplated in this application may be implemented in many different forms. FIGS. 5-16 described herein may provide some examples, but other examples are contemplated. The discussion of FIGS. 5-16 does not limit the breadth of the implementations. At least one of the aspects generally relates to video encoding and decoding, and at least one other aspect generally relates to transmitting a bitstream generated or encoded. These and other aspects may be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various examples to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

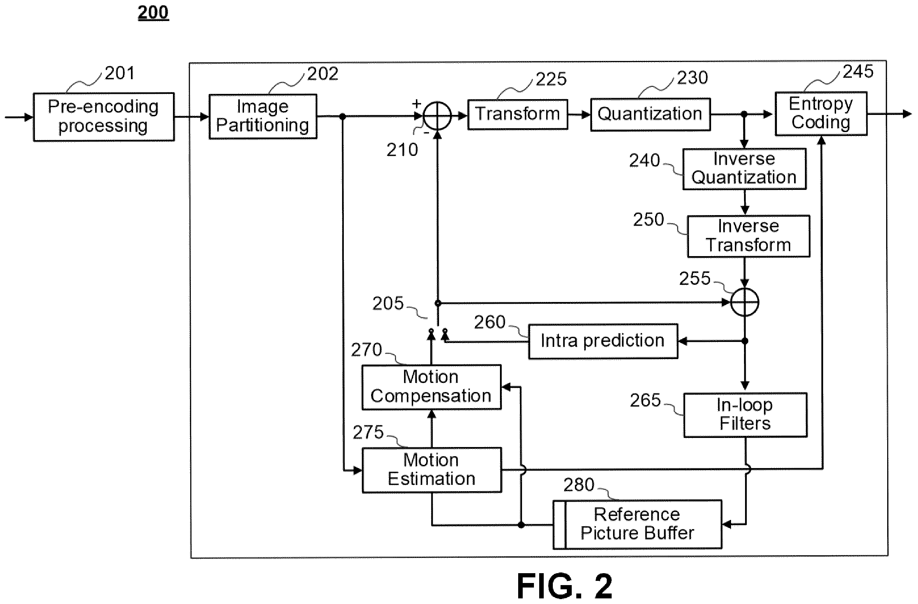

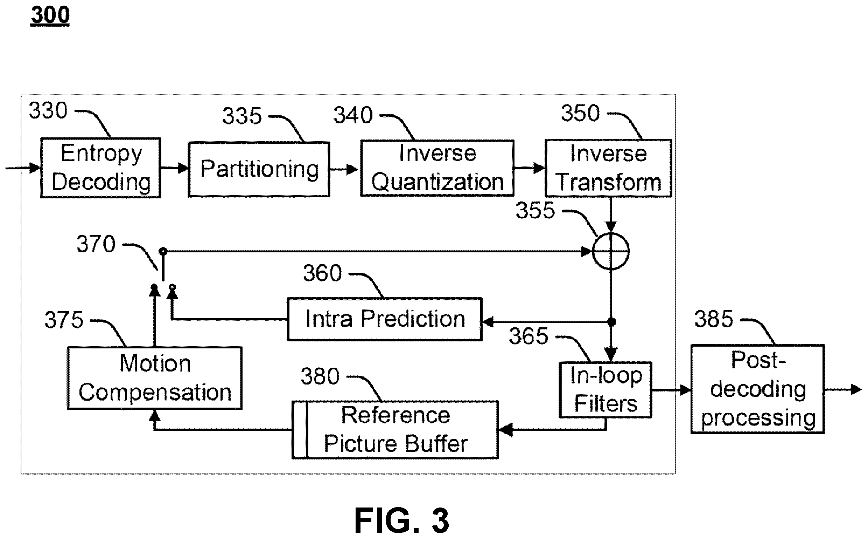

Various methods and other aspects described in this application may be used to modify modules, for example, decoding modules, of a video encoder 200 and decoder 300 as shown in FIG. 2 and FIG. 3. Moreover, the subject matter disclosed herein may be applied, for example, to any type, format or version of video coding, whether described in a standard or a recommendation, whether pre-existing or future-developed, and extensions of any such standards and recommendations. Unless indicated otherwise, or technically precluded, the aspects described in this application may be used individually or in combination.

Various numeric values are used in examples described the present application, such as chroma format (e.g.,

4:2:0, 4:2:2, 4:4:4), block sizes or coding unit sizes (e.g., height, width), partition dimensions, number of search areas, number of sub areas or regions, search step sizes, number of reconstructed blocks, number of entries in a list, precision, number of directions, number of modes, number of candidates, number of samples, number of references, bit values, sub-block sizes, number of parameters, flag values, multiplier values, constant values, range values, minimum values, maximum values, threshold values, index values, refinement sizes, etc. These and other specific values are for purposes of describing examples and the aspects described are not limited to these specific values.

FIG. 2 is a diagram showing an example video encoder. Variations of example encoder 200 are contemplated, but the encoder 200 is described below for purposes of clarity without describing all expected variations.

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata may be associated with the pre-processing, and attached to the bitstream.

In the encoder 200, a picture is encoded by the encoder elements as described below. The picture to be encoded is partitioned (202) and processed in units of, for example, coding units (CUs). Each unit is encoded using, for example, either an intra or inter mode. When a unit is encoded in an intra mode, it performs intra prediction (260). In an inter mode, motion estimation (275) and compensation (270) are performed. The encoder decides (205) which one of the intra mode or inter mode to use for encoding the unit, and indicates the intra/inter decision by, for example, a prediction mode flag. Prediction residuals are calculated, for example, by subtracting (210) the predicted block from the original image block.

The prediction residuals are then transformed (225) and quantized (230). The quantized transform coefficients, as well as motion vectors and other syntax elements, such as picture partitioning information, are entropy coded (245) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, deblocking/SAO (Sample Adaptive Offset)/ALF (Adaptive Loop Filtering) filtering to reduce encoding artifacts. The filtered image is stored at a reference picture buffer (280).

FIG. 3 is a diagram showing an example of a video decoder. In example decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which may be generated by video encoder 200. The bitstream is first entropy decoded (330) to obtain transform coefficients, prediction modes, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. Combining (355) the decoded prediction residuals and the predicted block, an image block is reconstructed. The predicted block may be obtained (370) from intra prediction (360) or motion-compensated prediction (i.e., inter prediction) (375). In-loop filters (365) are applied to the reconstructed image. The filtered image is stored at a reference picture buffer (380). In some examples (e.g., for a given picture) the contents of the reference picture buffer 380 on the decoder 300 side may be identical to the contents of the reference picture buffer 280 on the encoder 200 side (e.g., for the same picture).

The decoded picture can further go through post-decoding processing (385), for example, an inverse color transform (e.g. conversion from YCbCr 4:2:0 to RGB 4:4:4) or an inverse remapping performing the inverse of the remapping process performed in the pre-encoding processing (201). The post-decoding processing can use metadata derived in the pre-encoding processing and signaled in the bitstream. In an example, the decoded images (e.g., after application of the in-loop filters (365) and/or after post-decoding processing (385), if post-decoding processing is used) may be sent to a display device for rendering to a user.

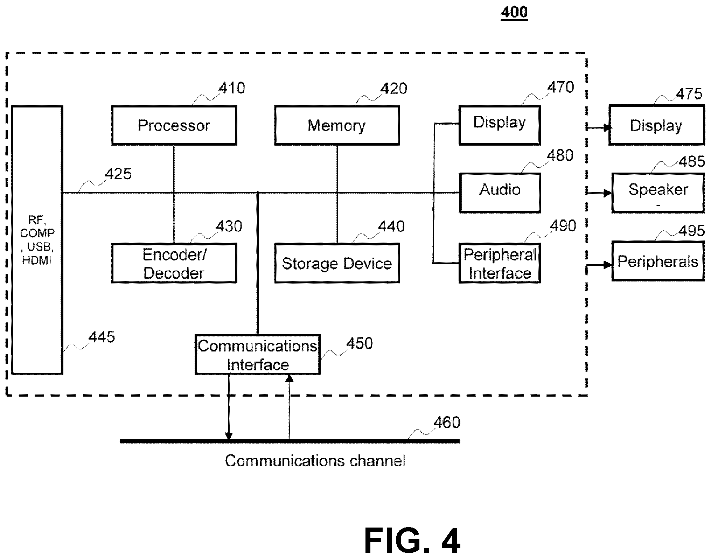

FIG. 4 is a diagram showing an example of a system in which various aspects and examples described herein may be implemented. System 400 may be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 400, singly or in combination, may be embodied in a single integrated circuit (IC), multiple ICs, and/or discrete components. For example, in at least one example, the processing and encoder/decoder elements of system 400 are distributed across multiple ICs and/or discrete components. In various examples, the system 400 is communicatively coupled to one or more other systems, or other electronic devices, via, for example, a communications bus or through dedicated input and/or output ports. In various examples, the system 400 is configured to implement one or more of the aspects described in this document.

The system 400 includes at least one processor 410 configured to execute instructions loaded therein for implementing, for example, the various aspects described in this document. Processor 410 can include embedded memory, input output interface, and various other circuitries as known in the art. The system 400 includes at least one memory 420 (e.g., a volatile memory device, and/or a non-volatile memory device). System 400 includes a storage device 440, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 440 can include an internal storage device, an attached storage device (including detachable and non-detachable storage devices), and/or a network accessible storage device, as non-limiting examples.

System 400 includes an encoder/decoder module 430 configured, for example, to process data to provide an encoded video or decoded video, and the encoder/decoder module 430 can include its own processor and memory. The encoder/decoder module 430 represents module(s) that may be included in a device to perform the encoding and/or decoding functions. As is known, a device can include one or both of the encoding and decoding modules. Additionally, encoder/decoder module 430 may be implemented as a separate element of system 400 or may be incorporated within processor 410 as a combination of hardware and software as known to those skilled in the art.

Program code to be loaded onto processor 410 or encoder/decoder 430 to perform the various aspects described in this document may be stored in storage device 440 and subsequently loaded onto memory 420 for execution by processor 410. In accordance with various examples, one or more of processor 410, memory 420, storage device 440, and encoder/decoder module 430 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some examples, memory inside of the processor 410 and/or the encoder/decoder module 430 is used to store instructions and to provide working memory for processing that is needed during encoding or decoding. In other examples, however, a memory external to the processing device (for example, the processing device may be either the processor 410 or the encoder/decoder module 430) is used for one or more of these functions. The external memory may be the memory 420 and/or the storage device 440, for example, a dynamic volatile memory and/or a non-volatile flash memory. In several examples, an external non-volatile flash memory is used to store the operating system of, for example, a television. In at least one example, a fast external dynamic volatile memory such as a RAM is used as working memory for video encoding and decoding operations.

The input to the elements of system 400 may be provided through various input devices as indicated in block 445. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 4, include composite video.

In various examples, the input devices of block 445 have associated respective input processing elements as known in the art. For example, the RF portion may be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which may be referred to as a channel in certain examples, (iv) demodulating the downconverted and band-limited signal, (v) performing error correction, and/or (vi) demultiplexing to select the desired stream of data packets. The RF portion of various examples includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box example, the RF portion and its associated input processing element receives an RF signal transmitted over a wired (for example, cable) medium, and performs frequency selection by filtering, downconverting, and filtering again to a desired frequency band. Various examples rearrange the order of the above-described (and other) elements, remove some of these elements, and/or add other elements performing similar or different functions. Adding elements can include inserting elements in between existing elements, such as, for example, inserting amplifiers and an analog-to-digital converter. In various examples, the RF portion includes an antenna.

The USB and/or HDMI terminals can include respective interface processors for connecting system 400 to other electronic devices across USB and/or HDMI connections. It is to be understood that various aspects of input processing, for example, Reed-Solomon error correction, may be implemented, for example, within a separate input processing IC or within processor 410 as necessary. Similarly, aspects of USB or HDMI interface processing may be implemented within separate interface ICs or within processor 410 as necessary. The demodulated, error corrected, and demultiplexed stream is provided to various processing elements, including, for example, processor 410, and encoder/decoder 430 operating in combination with the memory and storage elements to process the datastream as necessary for presentation on an output device.

Various elements of system 400 may be provided within an integrated housing, Within the integrated housing, the various elements may be interconnected and transmit data therebetween using suitable connection arrangement 425, for example, an internal bus as known in the art, including the Inter-IC (I2C) bus, wiring, and printed circuit boards.

The system 400 includes communication interface 450 that enables communication with other devices via communication channel 460. The communication interface 450 can include, but is not limited to, a transceiver configured to transmit and to receive data over communication channel 460. The communication interface 450 can include, but is not limited to, a modem or network card and the communication channel 460 may be implemented, for example, within a wired and/or a wireless medium.

Data is streamed, or otherwise provided, to the system 400, in various examples, using a wireless network such as a Wi-Fi network, for example IEEE 802.11 (IEEE refers to the Institute of Electrical and Electronics Engineers). The Wi-Fi signal of these examples is received over the communications channel 460 and the communications interface 450 which are adapted for Wi-Fi communications. The communications channel 460 of these examples is typically connected to an access point or router that provides access to external networks including the Internet for allowing streaming applications and other over-the-top communications. Other examples provide streamed data to the system 400 using a set-top box that delivers the data over the HDMI connection of the input block 445. Still other examples provide streamed data to the system 400 using the RF connection of the input block 445. As indicated above, various examples provide data in a non-streaming manner. Additionally, various examples use wireless networks other than Wi-Fi, for example a cellular network or a Bluetooth® network.

The system 400 can provide an output signal to various output devices, including a display 475, speakers 485, and other peripheral devices 495. The display 475 of various examples includes one or more of, for example, a touchscreen display, an organic light-emitting diode (OLED) display, a curved display, and/or a foldable display. The display 475 may be for a television, a tablet, a laptop, a cell phone (mobile phone), or other device. The display 475 can also be integrated with other components (for example, as in a smart phone), or separate (for example, an external monitor for a laptop). The other peripheral devices 495 include, in various examples, one or more of a stand-alone digital video disc (or digital versatile disc) (DVD, for both terms), a disk player, a stereo system, and/or a lighting system. Various examples use one or more peripheral devices 495 that provide a function based on the output of the system 400. For example, a disk player performs the function of playing the output of the system 400.

In various examples, control signals are communicated between the system 400 and the display 475, speakers 485, or other peripheral devices 495 using signaling such as AV.Link, Consumer Electronics Control (CEC), or other communications protocols that enable device-to-device control with or without user intervention. The output devices may be communicatively coupled to system 400 via dedicated connections through respective interfaces 470, 480, and 490. Alternatively, the output devices may be connected to system 400 using the communications channel 460 via the communications interface 450. The display 475 and speakers 485 may be integrated in a single unit with the other components of system 400 in an electronic device such as, for example, a television. In various examples, the display interface 470 includes a display driver, such as, for example, a timing controller (T Con) chip.

The display 475 and speakers 485 can alternatively be separate from one or more of the other components, for example, if the RF portion of input 445 is part of a separate set-top box. In various examples in which the display 475 and speakers 485 are external components, the output signal may be provided via dedicated output connections, including, for example, HDMI ports, USB ports, or COMP outputs.

The examples may be carried out by computer software implemented by the processor 410 or by hardware, or by a combination of hardware and software. As a non-limiting example, the examples may be implemented by one or more integrated circuits. The memory 420 may be of any type appropriate to the technical environment and may be implemented using any appropriate data storage technology, such as optical memory devices, magnetic memory devices, semiconductor-based memory devices, fixed memory, and removable memory, as non-limiting examples. The processor 410 may be of any type appropriate to the technical environment, and can encompass one or more of microprocessors, general purpose computers, special purpose computers, and processors based on a multi-core architecture, as non-limiting examples.

Various implementations involve decoding. "Decoding", as used in this application, can encompass all or part of the processes performed, for example, on a received encoded sequence in order to produce a final output suitable for display. In various examples, such processes include one or more of the processes typically performed by a decoder, for example, entropy decoding, inverse quantization, inverse transformation, and differential decoding. In various examples, such processes also, or alternatively, include processes performed by a decoder of various implementations described in this application, for example, determining if a neighboring coding unit (CU) is coded in a reconstruction-reordered intra block copy (RRIBC) mode; based on the determination that the neighboring CU is coded in the RRIBC mode, adding an intra template matching prediction (ITMP) merge candidate associated with the neighboring CU to an ITMP merge candidate list; flipping a template and/or a block associated with the added ITMP merge candidate (e.g., where the template and/or the block is flipped using a flipping direction); preforming ITMP process; selecting, from a refined ITMP candidate list, an ITMP candidate; decoding a current block using the selected ITMP candidate, etc.

As further examples, in one example "decoding" refers only to entropy decoding, in another example "decoding" refers only to differential decoding, and in another example "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various examples, such processes include one or more of the processes typically performed by an encoder, for example, partitioning, differential encoding, transformation, quantization, and entropy encoding. In various examples, such processes also, or alternatively, include processes performed by an encoder of various implementations described in this application. In various examples, such processes also, or alternatively, include processes performed by an encoder of various implementations described in this application, for example, determining if a neighboring coding unit (CU) is coded in a reconstruction-reordered intra block copy (RRIBC) mode; based on the determination that the neighboring CU is coded in the RRIBC mode, adding an intra template matching prediction (ITMP) merge candidate associated with the neighboring CU to an ITMP merge candidate list; flipping a template and/or a block associated with the added ITMP merge candidate (e.g., where the template and/or the block is flipped using a flipping direction); preforming ITMP process; selecting, from a refined ITMP candidate list, an ITMP candidate; encoding a current block using the selected ITMP candidate, etc.

As further examples, in one example "encoding" refers only to entropy encoding, in another example "encoding" refers only to differential encoding, and in another example "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that syntax elements as used herein, such as SearchRange_w, SearchRange_h, intra_tmp_flag, intra_tmp_idx , intra_tmp_fusion_flag, intra_tmp_fusion_idx, intra_tmp_lic_flag, intra_tmp_filter_flag, intra tmp sub_pel_precision_idx, intra tmp sub_pel direction_idx, itmp_idx, oneNullComp flag, bvOneNullComp flag, bvUseFlip flag, bvNullCompDir, etc. are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein may be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus may be implemented in, for example, appropriate hardware, software, and firmware. The methods may be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one example" or "an example" or "one implementation" or "an implementation", as well as other variations thereof, means that a particular feature, structure, characteristic, and so forth described in connection with the example is included in at least one example. Thus, the appearances of the phrase "in one example" or "in an example" or "in one implementation" or "in an implementation", as well any other variations, appearing in various places throughout this application are not necessarily all referring to the same example.

Additionally, this application may refer to "determining" various pieces of information. Determining the information can include one or more of, for example, estimating the information, calculating the information, predicting the information, or retrieving the information from memory. Obtaining may include receiving, retrieving, constructing, generating, and/or determining.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. Encoder signals may include, for example, residual signals, metadata, coding or motion representation modes and related signals (e.g., ITMP-related flags, LIC-related flags), partitioning modes, reference pictures, motion vector predictors (MVPs), motion vector differences (MVDs), indices, candidate lists, indication of RRIBC mode, flip type, flip direction, etc. In this way, in an example the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various examples. It is to be appreciated that signaling may be accomplished in a variety of ways. For example, one or more syntax elements, flags, and so forth are used to signal information to a corresponding decoder in various examples. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information can include, for example, instructions for performing a method, or data produced by one of the described implementations. For example, a signal may be formatted to carry the bitstream of a described example. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on, or accessed or received from, a processor-readable medium.

Many examples are described herein. Features of examples may be provided alone or in any combination, across various claim categories and types. Further, examples may include one or more of the features, devices, or aspects described herein, alone or in any combination, across various claim categories and types. For example, features described herein may be implemented in a bitstream or signal that includes information generated as described herein. The information may allow a decoder to decode a bitstream, the encoder, bitstream, and/or decoder according to any of the embodiments described. For example, features described herein may be implemented by creating and/or transmitting and/or receiving and/or decoding a bitstream or signal. For example, features described herein may be implemented a method, process, apparatus, medium storing instructions, medium storing data, or signal. For example, features described herein may be implemented by a TV, set-top box, cell phone, tablet, or other electronic device that performs decoding. The TV, set-top box, cell phone, tablet, or other electronic device may display (e.g. using a monitor, screen, or other type of display) a resulting image (e.g., an image from residual reconstruction of the video bitstream). The TV, set-top box, cell phone, tablet, or other electronic device may receive a signal including an encoded image and perform decoding.

Intra template matching prediction (ITMP) may be an intra prediction mode. ITMP may involve copying a (e.g., the best) prediction block from a reconstructed part of a current frame, whose L-shaped template may match the current template. For a predefined search range, the encoder may search for a similar (e.g., the most similar) template as the current template in the reconstructed part of the current frame and may use a corresponding block as a prediction block. The encoder may signal the use of ITMP to the decoder. The same prediction operation may be performed at the decoder side.

A prediction signal may be generated by matching the L-shaped, top-only, or left-only causal neighbor of a current block with another block in a predefined search area, for example, as illustrated by FIG. 5. FIG. 5 illustrates an example of an intra template matching search area. There may be multiple (e.g., 6) predefined search areas, such as R1 to R6 shown in FIG. 5, which may include reconstructed samples from the top and left CTUs as well as part of the reconstructed samples within the current CTU that may be located above, to the left of, to the bottom-left of, and to the top-right of the current block. A sum of absolute differences (SAD) may be used as a cost function for ITMP.

Given a search order of the multiple (e.g., 6) regions utilized, such as, e.g., R4, R5, R6, R1, R2, and R3, a decoder may construct a candidate list of template matching block vectors (e.g., up to 19 such vectors) that may be ranked (e.g., in an ascending order) according to a template cost (e.g., calculated based on a SAD). One or more of the following modes may be supported for ITMP.

A single predictor mode may be supported in which a single predictor may be selected from the candidate list. A fusion of multiple predictors mode may be supported in which multiple predictors may be blended to derive a final prediction block. The blending weights may be computed based on the template matching cost of each predictor, or using a suitable weight derivation method (e.g., a Wiener-filter based weight derivation method). A sub-pel precision mode may be supported in which, if a single predictor is used, a sub-pel precision may be used with a 1/2-pel precision, a 1/4-pel precision and/or a 3/4-pel precision, each with multiple (e.g., 8) possible directions. A linear filter model mode may be supported in which a linear filter may be learned between a reference template and the current template. The linear filter may be applied to the reference block. A linear filter model mode may be used for a single predictor, for example, when sub-pel precision is not used.

The dimensions of one or more (e.g., all) regions may be defined by SearchRange_w, SearchRange_h, which may be set proportional to the block dimension (BlkW, BlkH) to have a fixed number of SAD comparisons per pixel, for example, based on the following:

$$SearchRange\_w = min(64, a * BlkW)$$

$$SearchRange\_h = min(64, a * BlkH)$$

where 'a' may be a constant that controls the gain/complexity trade-off (e.g., 'a' may be equal to 5).

The complexity of ITMP may be proportional to a template matching process, where the difference between the templates of a current block and of a predicted block may be computed for a (e.g., each) position within the available search range. The search range of one or more (e.g., all) search regions may be subsampled by a factor (e.g., a factor of 3), for example, to speed up a template matching process (e.g., such a technique may be referred to as a sparse search). For example, during a search, every third position in a horizontal and/or vertical direction may be considered in the first step of the search. A refinement process may be performed after the first step is finished. In a refinement process (e.g., all) positions within the sparse search may be checked and their template cost may be calculated. The refinement may be performed via a second template matching search around the best match (e.g., or around several best candidates from a sparse search), for example, with a reduced range.

ITMP may be enabled for one or more (e.g., certain) CUs (e.g., CUs with a size less than or equal to 64 pixels in width and/or height). The CU size (e.g., maximum CU size) for intra template matching may be configurable.

The use of ITMP may be signaled at a CU level, for example, through a dedicated flag and/or if decoder-side intra mode derivation (DIMD) is not used for a current CU. For example, an inference may be drawn that other intra modes are unused if ITMP is used.

ITMP may be used for natural and/or screen content. Multi-candidate ITMP may be performed in which a candidate list may be constructed with candidate block vectors (BVs) ranked in an ascending order based on their template matching costs. The index of a selected candidate may be signaled in a bitstream.

Additional ITMP modes may be performed, including, for example, a left template mode and/or an above template mode (e.g., besides the L-shape mode described herein). The left template mode and/or the above template mode may use (e.g., only use) the left side or above side of a current prediction unit (PU) to derive a template matching candidate. Different templates may be used in the matching process.

In some examples, ITMP may construct a candidate list with candidate BVs ranked in ascending order of their template matching costs. The index of selected candidate may be signaled in the bit-stream.

In some examples, ITMP may select a (e.g., only one) BV that has the smallest template matching cost and there may not be additional signaling (e.g., the same process may be performed on the encoder and decoder sides, hence no additional signaling may be performed to indicate the final predictor). In some examples (e.g., such as for camera captured content), it may be difficult for the decoder to find a perfect match, such as when multiple blocks are similar to the current block and their respective template matching costs are close. The BV candidate with the smallest template matching cost may not be the best predictor.

In some examples, ITMP may use multiple candidates (e.g., to address the issue mentioned above). A candidate list may be constructed. Candidate BVs on the list may be ranked in an ascending order based on their template matching costs. An index may be signaled in a bit-stream to indicate which candidate BV is used for the current block. Such an approach may utilize template matching to select a short list of promising candidates from a large number of possible BVs. The encoder, which may refer to the original current block, may make a final decision about which BV to use. An example of simplified syntax associated with this approach may be as shown in Table 1:

Table 1 - Example of simplified syntax

| ... |
| --- |
| intra_tmp_flag |
| if(intra_tmp_flag) { |
|     intra_tmp_idx |
|   } |
| ... |

An intra_tmp_flag may be equal to one (1), for example, if the current block uses ITMP. An intra tmp_idx may indicate which BV in a candidate BV list may be used to identify a prediction block.

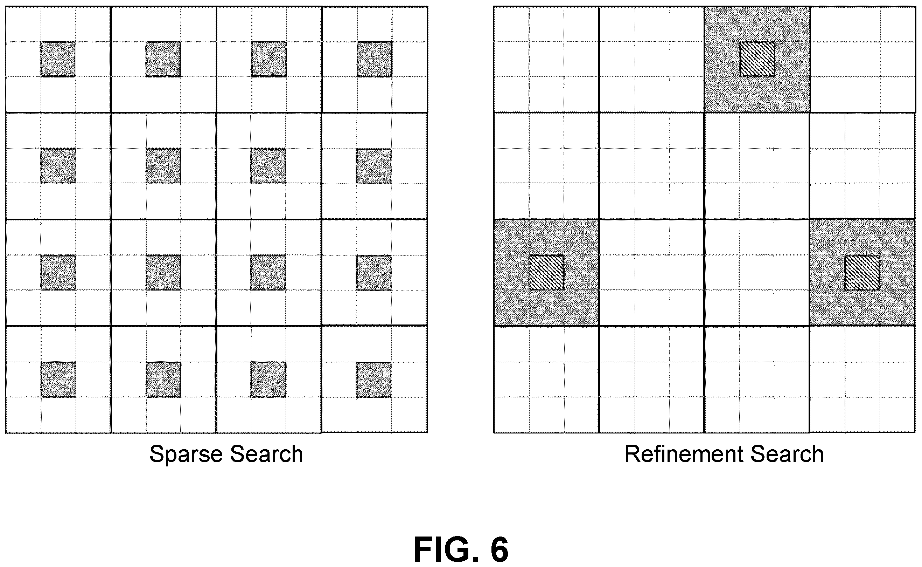

A candidate list may be built based on a sparse search and/or a refinement search, which may be performed, for example, as illustrated in FIG. 6. FIG. 6 illustrates an example of a sparse search and a refinement search in an ITMP process. In an example of a sparse search, a sub-sampling factor may be set. For example, based on a fact of three (3), every third position in horizontal and vertical direction may be tested, e.g., in a first step (e.g., the sparse search). A number of (e.g., 30) top BVs may be maintained based on their template matching costs. In a second step (e.g., a refinement search), a (e.g., each) 3x3 block around one or more (e.g., each) of the top (e.g., 30) BVs may be tested. The 3x3 refinement may respect the boundaries of a region. The refinement candidates of a selected candidate within the region may (e.g., must) stay within the region. A number of (e.g., 19) top BVs may be selected to form a candidate list. One of the candidates may be selected (e.g., by an encoder) as a final predictor. An index for the final predictor may be signaled (e.g., by an encoder to a decoder).

ITMP syntax may be coded or decoded, for example, if a DIMD flag is set to false and/or if an ITMP sps flag is set to true, as illustrated by example in Table 2:

Table 2 - Example of ITMP syntax

| ... |
| --- |
| intra_tmp_flag |
| if(intra_tmp_flag) { |
|   intra_tmp_fusion_flag |
|   if(intra_tmp_fusion_flag) { |
|     intra_tmp_fusion_idx |
|     intra_tmp_lic_flag |
|   } else { |
|     intra_tmp_idx |
|     intra_tmp_filter_flag |
|     if(!intra_tmp_filter_flag) { |
|       intra_tmp_lic_flag |
|       } |
|     if(!intra_tmp_filter_flag and !intra_tmp_lic_flag ) { |
|       intra tmp sub_pel_precision idx |
|       if(intra tmp sub_pel_precision idx != 0) { |
|         intra tmp sub_pel direction idx |
|       } |
|     } |
|   } |
| } |

(continued)

```
...
```

An intra_tmp_flag may indicate whether the intra prediction type for a current block is IntraTMP. An intra_tmp_fusion_flag may indicate whether fusion is used for the current block. An intra_tmp_fusion_idx may specify the candidate set used for IntraTMP fusion (e.g., the range of intra_tmp_fusion_idx may be 0 to 2). An intra_tmp_fusion_idx may be used to indicate one of multiple (e.g., three) candidate sets {BV0 to BV4}, {BV5 to BV9}, {BV10 to BV14}. An intra_tmp_lic_flag may indicate whether ITMP with LIC is used. An intra tmp_idx may specify the index of a BV in the candidate list used for the current block (e.g., the range of intra_tmp_idx may be 0 to 18 and/or for candidates from an L-shape template, the top template and the left template may be included in the same candidate list). An intra_tmp_sub_pei_precision_idx may specify a precision index for the current block (e.g., the range of intra_tmp_sub_pel_precision_idx may be 0 to 3, which may be used to indicate integer-pel precision, 1/2-pel precision, 1/4-pel precision and 3/4-pel precision, respectively). An intra_tmp_sub_pel_direction_idx may specify a sub-pel direction index for the current block (e.g., the range of intra_tmp_sub_pel_phase_idx may be 0 to 7).

ITMP may be improved by adding more candidates to the ITMP search process (e.g., utilizing block vectors of one or more surrounding blocks of a current block).

In the ITMP mode, a template matching search process within pre-defined search regions may be performed to obtain multiple (e.g., up to 19) candidate block vectors. In some examples, the ITMP template matching search may not take into consideration the block vector information of one or more neighboring PUs of a current block. The ITMP template matching search process may be augmented with additional (e.g., new) candidates, such as, for example, one or more block vectors associated with the neighboring PUs that may be coded with an IBC (Intra Block Copy) mode or ITMP mode. The additional candidates may be referred to herein as ITMP merge candidates. The additional candidates may improve the ITMP mode by providing more probable candidates to the ITMP search process. For example, some other implementations of the ITMP mode may not explore block vectors from neighboring blocks even though they may be more correlated with the properties of the current block. An ITMP candidate list may be expanded to include the additional candidates block vectors (e.g., ITMP merge candidates).

In some examples (e.g. if a neighboring CU is ITMP coded), a flag may be signaled to indicate the current CU copies the same ITMP information from the neighboring CU.

In examples, the inclusion of ITMP merge candidates may involve testing the BV(s) from a (e.g., typical) ITMP search range (e.g., inside the search range depicted in FIG. 5) and/or the BV(s) outside of a (e.g., typical) ITMP search range (e.g., outside the search range depicted in FIG. 5). This approach may be similar to the IBC merge mode, where a merge index may be coded to indicate which neighboring PU block vector is selected. A PU coded in the IBC merge mode may utilize already selected block vectors of one or more neighboring PUs (e.g., IBC or ITMP-coded PUs may be considered), which may be better correlated with the current PU. In some implementations of the IBC merge mode, ITMP block vectors may be used as IBC merge candidates, but not the other way around, which may impose a limitation on the ITMP process. Therefore, using information of one or more neighboring PUs while performing a template matching search for ITMP may lead to improved performance. A template matching cost process to rank additional (e.g., new) candidates among the already computed candidates (e.g., such as those coming from the sparse search) may be used.

In examples, the same merge candidate list used for IBC may be considered for ITMP. The list may include local and non-local neighboring candidates (e.g., there may be up to 25 local and non-local PUs that may be considered while selecting a merge candidate). The processing order of neighboring CUs may be the same as for the IBC merge mode. A block vector found within a local or non-local neighborhood of the current PU may be added to the current ITMP candidate list. For example, the block vector may be added after the sparse candidates identified during the first step (e.g., sparse search) of the candidate selection process (e.g., the block vector may be concatenated to the end of the sparse search candidate list). A pre-defined number of (e.g., up to 25) merge candidates may be added. The respective template costs associated with the merge candidates may be obtained, for example, in the same way as for the sparse candidates. The merge candidates may be ranked together with the other candidates (e.g., the sparse candidates). A pre-defined number of the top (e.g., 30) candidates may be selected for further refinement. Hence, by using the ITMP merge candidates, the top (e.g., 30) candidates may include some candidates that are not part of the sparse search.

The top (e.g., 30) candidates may be refined with a second template matching step (e.g., a refinement search process). In examples, the refinement search process for a candidate that is from the list of merge candidates may be different than for those candidates that are from the sparse search. For example, instead of using 3x3 refinement around a selected point, an 11x11 refinement may be used if the candidate is from the merge list.

Candidates (e.g., all candidates) tested in the refinement process may be ranked. A list of (e.g., final 19) candidates may be selected. A (e.g., one) candidate from the list (e.g., of 19) may be selected by an encoder (e.g., during a rate-distortion process). The index of the selected candidate (e.g., index of the candidate on the list) may be signaled (e.g., to a decoder).

Other aspects of the encoding/decoding process for the ITMP CU may be performed, for example, after a set of ITMP predictor candidates for an ITMP CU is obtained using the techniques described herein. For example, the predictor indicated by an ITMP index may be selected. A residual block of the CU may be encoded/decoded based on the selected predictor (e.g., the residual block may be added to the prediction block, resulting in a reconstructed CU at the decoder side).

The techniques described herein may expand an ITMP candidate list with additional (e.g., new) BVs that may not have been previously checked during the ITMP process. The additional BVs may include IBC block vectors, whose search region may be larger than ITMP BVs. The additional BVs may include candidates that may not otherwise be selected in a first pass of template matching (e.g., during a sparse search of subsampled regions). The additional BVs may be better correlated with the current block, e.g., as they may have been selected previously for predicting nearby blocks.

The compression efficiency of a video encoder and decoder (codec) with respect to coding video blocks of the ITMP mode may be improved by adding more merge candidates that may be inherited from neighboring PUs. In some examples (e.g., if a neighboring PU is coded in bi-IBC mode) BVs (e.g., both BVs) may be included in the ITMP merge list. Otherwise (e.g., if the neighboring PU is not coded in bi-IBC mode), a uni-IBC BV may be included in the ITMP merge list.

In some examples (e.g., if a neighboring PU is coded in ITMP mode and intra_tmp_idx > 0), a BV that is selected for the PU and a best-by-cost ITMP candidate may be included in the ITMP merge list. The selected and best-by-cost BVs may be the same, for example, if intra_tmp_idx is equal to 0, in which case one or the other candidate may be included in the ITMP list.

In some examples, N out of M available merge candidates (e.g., only N out of M available merge candidates) may be used, for example, if M>N. Merge candidates outside the ITMP search range may be prioritized. In some examples, M ITMP merge candidates may be selected (e.g., M can be up to 50). In some examples, N merge candidates may be used at the end (e.g., N=10) for testing and comparison with other candidates.

A sampling factor increase (e.g., from 3 to 4) may (e.g., slightly) change a refinement process (e.g., instead of a 3x3 refinement, a refinement process may use 2 lines on the left, 2 lines on the top, 1 line on the right, and one line on the bottom).

In some examples, a BV refinement range may be reduced (e.g., in LIC case) and/or fewer BV candidates issued from a sparse search may be kept in LIC compared to some implementations (e.g., regular ITMP). Additional merge candidates may be utilized in a way that keeps the complexity of the encoding and/or decoding operation reasonable.

The performance of ITMP with merge candidates may be referred to herein as an ITMP merge mode. An ITMP search process may be improved or optimized, and its complexity may be reduced. One or more bi-prediction IBC candidates may be included in an ITMP merge list. One or more best-by-cost ITMP candidates may be included in the ITMP merge list. A subset of available merge candidates (e.g., N out of M available merge candidates) may be used (e.g., if M>N). IBC candidates may be prioritized. Merge candidates outside an ITMP search range may be prioritized. A refinement (e.g., 3x3 refinement) may be performed, for example, if a merge candidate is inside an ITMP search region. The cost and/or position of already tested template matching candidates may be stored (e.g., cached in memory) to skip repetitive template matching cost calculations.

Optimized refinement may be performed, for example, if a merge candidate is outside ITMP search region. In examples, multiple (e.g., 25) candidates associated with the neighboring PUs of a current CU may be added to an ITMP merge list. The candidates may be added in a way and/or in an order that may be similar to (e.g., the same as) candidates for an IBC merge mode (e.g., the candidates may be selected BVs associated with already processed PUs). Such an ITMP merge list may be further expanded, for example, by adding more candidates from blocks coded in the IBC or ITMP mode.

In examples (e.g., if a neighboring PU is coded in a bi-prediction IBC mode), multiple (e.g., two) BVs (e.g., instead one BV) from the bi-prediction IBC mode may be used and added to an ITMP merge list (e.g., the two BVs may be associated with a PU coded in the bi-Prediction IBC mode).

In examples, bi-predicted merge candidates may not include multiple (e.g., two) different ITMP prediction candidates associated with a PU. ITMP prediction may include a bi-prediction candidate. The sorting of bi-predictive candidates may be performed, for example, by computing the template matching (TM) cost of a bi-predictive candidate as the average TM cost of (e.g., two) uni-predictive BVs that the bi-prediction combines.

In some examples (e.g., if a neighboring PU is coded in the ITMP mode), a BV selected for a neighboring PU may be added to an ITMP merge list. The BV selected for the PU may be added to the list. The BV may be indicated by an ITMP index (e.g., intra_tmp_idx) signaled in a bitstream, for example. As described herein, the BV may or may not be the one with the smallest template cost. The BV with the smallest template cost (e.g., this may be the first candidate on a final candidate list, for example, with intra tmp_idx equal to 0) may be included, for example, if intra tmp_idx is larger than 0.

One or more of the candidate selection techniques described herein may be combined. For example, one or more bi-prediction IBC candidates and an ITMP best candidate by template costs may be added to an ITMP merge list of candidates, e.g., besides those already defined herein.

An ITMP merge list may be expanded (e.g., to include up to 50 candidates), for example, by using one or more of the techniques described herein. The expanded list of candidates may be used in the same way as a shorter list (e.g.,

include up to 25 neighboring candidates).

Operations associated with the construction of an ITMP merge candidate list may be optimized. In examples, up to 50 candidates may be added as ITMP merge candidates. The increased number of candidates may lead to improved coding performance, but may cause computational costs to increase. A pre-selection of ITMP merge candidates may be applied, for example, to maintain the computational cost within reasonable limits. The pre-selection may be applied prior to template cost calculations (e.g., some candidates may be discarded prior to template matching cost computations in order to reduce complexity). The pre-selection may be applied in a way that does not degrade the coding gains compared to using the expanded list of candidates (e.g., all 50 candidates) while still achieving complexity reduction.

In examples, a subset of (e.g., N out of M) available merge candidates may be used (e.g., M>N). For example, there may be a total of M ITMP merge candidates available for a current CU (e.g., M may be less or equal to 50). Instead of using all M candidates, which may increase the computational complexity of an encoder and/or a decoder, the number of merge candidates may be limited to N (e.g., N=5). The value of N may be preconfigured. If M>N, the ITMP merge candidate list may be shortened to N (e.g., the first N candidates on the original list may be kept on the ITMP merge list and the others may be discarded). If M<=N, all M available candidates may be used.

In examples, the ITMP merge list may be populated in a way that multiple (e.g., all) available neighboring IBC merge candidates may be added to the list first (e.g., including uni-prediction BV(s) and bi-direction BV(s), if available), followed by one or more ITMP candidates, e.g., if available. The list of candidates may (e.g., then) be shortened, for example, as described herein (e.g., by selecting the first N candidates on the list). The IBC candidates may (e.g., therefore) be prioritized when constructing and preselecting ITMP candidates (e.g., N candidates).

In examples, ITMP merge candidates located outside of an ITMP search region (e.g., as shown in FIG. 5) may be prioritized when constructing an ITMP merge list, for example, regardless of whether the candidates come from an IBC or ITMP coded neighboring block. The ITMP merge candidate list may be populated in this way. The list may (e.g., then) be shortened (e.g., as described herein).

In examples, early termination of ITMP merge list construction may be applied (e.g., in all cases) when the list is to be shortened (e.g., to N candidates). For example, when N candidates have been added to the list using one or more of the techniques described herein, the construction process may be terminated without getting other ITMP merge candidates, and the N candidates may be used (e.g., as described herein).

In examples, refinement operations applied to candidates derived from a sparse search may be different than refinement operations applied to candidates derived from an ITMP merge list. For example, 3x3 refinement may be applied to candidates derived from the sparse search (e.g., as a first step of the search process) and $11\times11$ dense refinement may be applied to candidates selected during the first step from ITMP merge candidates (e.g., dense refinement may mean that each candidate within a 11x11 window may be tested). The 11x11 dense refinement may be too complex in view of the computational capabilities of some encoders/decoders.

In examples, 3x3 refinement may be performed for an ITMP merge candidate if the candidate is located within an ITMP search region (e.g., one of the regions illustrated in FIG. 5) while 11x11 refinement may be performed for a merge candidate located outside the ITMP search region (e.g., regardless of whether the candidate comes from an IBC block or an ITMP block).

In examples, ITMP merge candidates associated with an IBC block may use the 11x11 refinement process while ITMP merge candidates associated with an ITMP neighboring block may use the 3x3 refinement process (e.g., regardless of the position of the block relative to an ITMP search region).

Search window sizes described herein (e.g., the 3x3 and 11x11 search window sizes) are examples. They may refer generally to small and large refinement windows, where one may add acceptable computational complexity to the refinement process and the other may add undesirable computational complexity (e.g., the acceptable and undesirable complexity levels may be based on software and/or hardware capabilities). In various implementations, different search window sizes may be used.

Reconstruction-Reordered intra block copy (RRIBC) mode may be generalized to block vectors (e.g., any block vector having one component equal to zero). An RRIBC mode may be allowed for IBC coded blocks. When RRIBC is applied, the samples in a reconstruction block may be flipped according to a flip type (e.g., in a flip direction) of the current block. At the encoder side, the original block may be flipped, for example, before motion search and residual calculation. The prediction block may be derived without flipping. At the decoder side, the reconstruction block may be flipped back to restore the original block. Use of RRIBC mode implies that flipping is performed.

Flip methods supported for RRIBC coded blocks may include a horizontal flip method and a vertical flip method. A syntax flag may be signaled for an IBC AMVP coded block. The syntax flag may be utilized to indicate whether the reconstruction is flipped (e.g., indicating if RRIBC mode is used or not). If the reconstruction is flipped, another flag may be signaled specifying the flip type. For IBC merge, the flip type may be inherited from neighboring blocks, e.g., without syntax signaling. Considering the horizontal or vertical symmetry, the current block and the reference block may be aligned horizontally or vertically. In examples, if/when a horizontal flip is applied, the vertical component of the BV may not be signaled and/or may be inferred to be equal to zero. In examples, if/when a vertical flip is applied, the horizontal component of the BV may not be signaled and/or may be inferred to be equal to zero.

The use of RRIBC mode may be signaled, accompanied (e.g., followed) by an indication of the direction of the flipping (e.g., horizontal or vertical). The direction of the zero component (e.g., horizontal or vertical component being zero) may be derived, for example, from the signaled directional flag of the flipping.

Alternatively (e.g., instead of usual IBC AMVP list), when RRIBC is used, multiple (e.g., two) block vector predictor (BVP) candidates may be derived and/or the sign of the non-zero BV component may be derived at decoder side. For example, AMVP BVP0 may be set to the nearest valid location to the current block (e.g., -cbWidth or -cbHeight), e.g., so that the non-zero block vector difference (BVD) may always be negative, pointing to the left for a BV with a zero vertical component or to the above for a BV with a zero horizontal component. AMVP BVP1 may be set to the farthest position from the current block in the valid reference region, e.g., the left boundary or the top boundary of the IBC search region. Consequently, if the BVP1 is selected, the BVD may always be positive, pointing to the right for BV with a zero vertical component or to the bottom for BV with a zero horizontal component.

An (e.g., optimal) IBC AMVP index may be signaled, which may allow obtaining (e.g., deriving) the sign of the non-zero BVD component at the decoder side. The absolute magnitude of the non-zero BVD component may be (e.g., further) signaled.

RRIBC mode may be generalized to block vectors (e.g., any block vector with one vector component equal to zero). Systems and methods described herein may be extended to a BV having a (e.g., one) null component, regardless of whether the BV uses the RRIBC mode (e.g., regardless of whether flipping is used or not). In other words, BVs with a (e.g., one) null component may be signaled to the decoder through a dedicated flag, even if flipping of the block is not favorable. BVs with a (e.g., one) null component, e.g., including the RRIBC blocks (RRIBC blocks are the blocks to which flipping mode is applied), may be signaled to the decoder, for example, by a *bvOneNullComp* flag. Instead of invoking the AMVP IBC list construction, BVP candidates may be determined in the same way as in RRIBC mode, which may be adjusted to the boundaries of the valid IBC search region according to the horizontal or vertical direction, e.g., as may be indicated by a bvNullCompDir flag. Use of flipping may be signaled by, for example, a bvUseFlip flag. The direction of the flipping (e.g., horizontal or vertical) may be deduced from the direction of the non-zero component, e.g., bvNullCompDir flag. This approach represents a generalization of RRIBC to a (e.g., any) block vector having a (e.g., one) component equal to zero (0).

Syntax may be summarized as follows. If the *oneNullComp* flag indicates that a (e.g., one) BV component is zero, another flag, e.g., *bvNullCompDir,* may indicate the direction of the zero component. If flipping may be used, another flag, e.g., *bvUseFlip,* may indicate if flipping is performed in the direction of the non-zero component. The zero-component of a BV may be deduced from the *oneNullComp* and *bvNullCompDir* flags. Thus, the zero-component of a BV may not be needed to encode or decode the syntax elements related to the vector component.

The use of RRIBC mode and/or its generalization to a (e.g., any) BV with a (e.g., one) null component may be controlled by a high level syntax element, e.g., a sequence parameter set (SPS) flag. In some examples, the use of flipping may be controlled by an SPS flag. Table 3 shows an example of syntax, which may assume that the use of flipping is enabled (e.g., in both cases).

Table 3 - Example of syntax

| |
|---|
| ... |
| sps_oneNullComp_flag<br>sps_useFlip_flag |
| if(sps_oneNullComp_flag) { |
| oneNullComp |
| if(oneNullComp) { |
| bvNullCompDir |
| if(sps_useFlip_flag ) { |
| bvUseFlip |
| } |
| } |
| } |
| ... |

RRIBC mode may refer to native RRIBC mode (e.g., as described herein) and (e.g., also) to the generalization of RRIBC when *useFlip* is enabled at SPS level (e.g., as described herein).

The compression efficiency of state-of-the-art video codecs may be improved, for example, for blocks coded in ITMP merge mode, e.g., if/when ITMP merge list is utilized. ITMP merge performance may be improved, for example, if/when a (e.g., one) of the neighboring blocks is coded in RRIBC mode, e.g., such as if/when flipping may be used. During construction of an ITMP merge list, e.g., when merge candidates are fetched from the neighboring blocks, information on flipping may be considered (e.g., as opposed to collecting only BVs of the neighboring CUs used in an ITMP process). For example, a (e.g., one) of the neighboring blocks may be RRIBC coded, and flipping may be applied. Knowledge of RRIBC coding and application of flipping may be useful, for example, when creating an ITMP merge list, when creating an ITMP prediction, and/or when calculating a template matching (TM) cost, for example, to handle encoding/decoding processes in a more coherent way when constructing an ITMP block by using ITMP merge mode.

Examples are provided with respect to ITMP merge candidates and coexistence with RRIBC flip mode. ITMP merge candidates that are fetched from RRIBC coded neighboring merge candidate blocks may be handled in a more coherent way in ITMP merge mode. As described herein, a merge candidate may be discarded (e.g., to avoid adding the merge candidate to the ITMP merge list), for example, if a neighboring CU is coded in RRIBC mode.

An ITMP merge candidate may be added to the list, for example, if a neighboring CU is coded in RRIBC mode. A flip may be performed during a template matching process, where one or more of the following may occur, for example: reference template may be flipped; reference block may be flipped; and/or the (e.g., same) flipping process may be applied to (e.g., all) refined blocks that are in RRIBC mode.

An ITMP merge candidate may be added to the list, for example, if a neighboring CU is coded in RRIBC mode. A flip may be performed during a template matching process, where one or more of the following may occur, for example: a current block's template may be flipped; a current block may be flipped; and/or the (e.g., same) flipping process may be applied to (e.g., all) refined blocks that are in RRIBC mode.

A flipped and a non-flipped version of the ITMP merge candidate may be tested, for example, regardless of whether a neighboring merge block is coded in RRIBC mode.

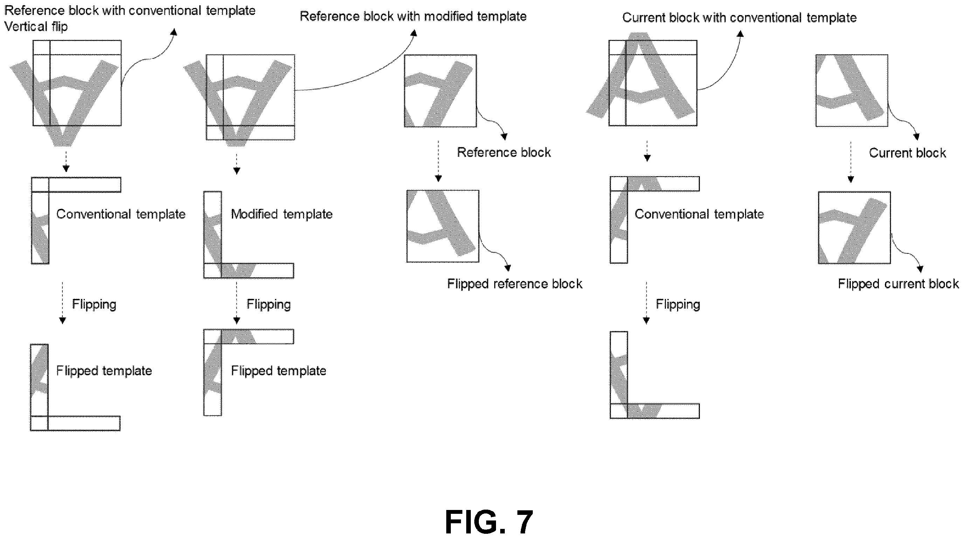

FIG. 7 illustrates an example of a vertical flip case. Several approaches may be derived, for example, depending on whether flipping is applied to the reference or the current template. Flipping of the image block may be applied on the reference side (as illustrated on left part of FIG. 7) or on the current block side (as illustrated on right part of FIG. 7). A conventional template or a modified template may be used on the reference side. Flipping of the template may be applied on the reference side or on the current block side.

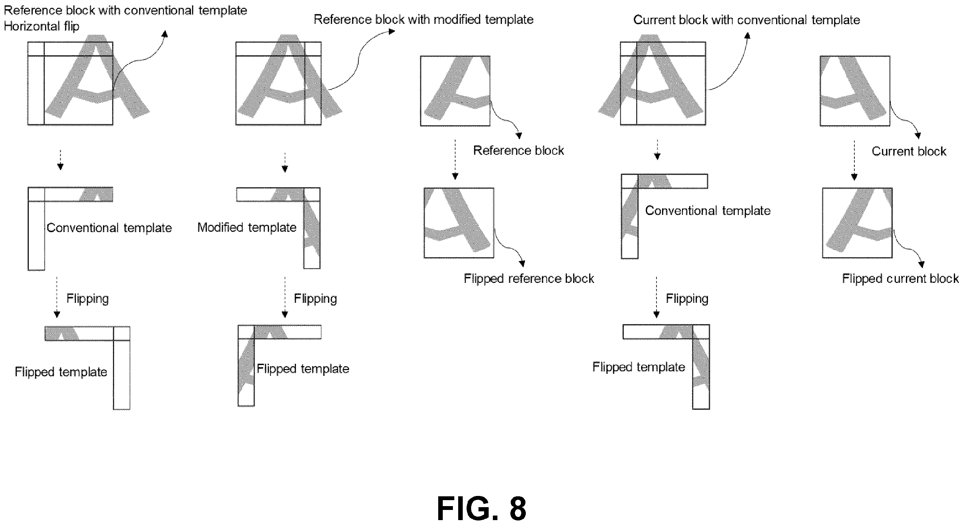

FIG. 8 illustrates an example of a horizontal flip case. Flipping of the image block may be applied on the reference side (as illustrated on left part of FIG. 8) or on the current block side (as illustrated on right part of FIG. 8). A conventional template or a modified template may be used on the reference side. Flipping of the template may be applied on the reference side or on the current block side.

Examples may assume that the ITMP merge candidate is fetched from the neighboring block coded in RRIBC mode. Information on the RRIBC mode and direction of the flipping of the merge candidate block (e.g., neighboring block) may be stored to be used in ITMP merge process. The current ITMP candidate may inherit the same RRIBC mode and flipping direction as the merge candidate block. The information (e.g., regarding the RRIBC mode and flipping direction) may be used, for example, during the ITMP process of the current block, e.g., while creating a prediction and calculating template matching cost of the ITMP merge candidate.

In some examples, merge candidates may be discarded. In some examples, a determination may be made whether an ITMP merge candidate to be considered may be fetched from the neighboring block that is coded by using RRIBC flip mode. The ITMP merge candidate may be discarded, e.g., not added to the ITMP merge list. In some examples, an ITMP merge candidate may be removed from the ITMP merge list (e.g., if already added to the ITMP merge list).

In some examples, flipping may be applied on the reference block side, e.g., template and/or reference image block may be flipped horizontally or vertically, for example, depending on the RRIBC flip direction of the merge candidate block. The flipping direction may be indicated, for example, with a syntax element that may be fetched/inherited from the ITMP merge candidate block.

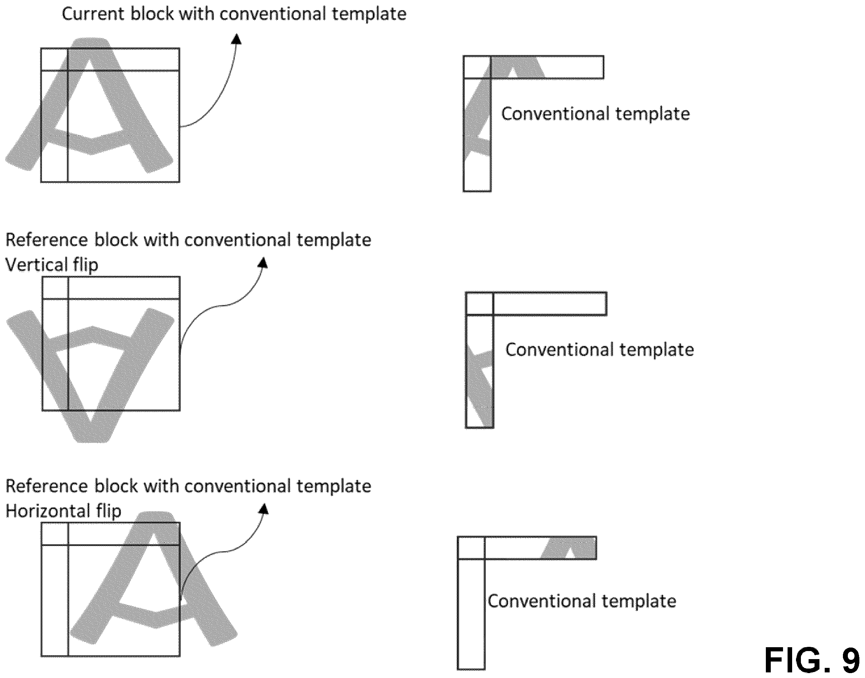

In some examples, a reference block with a conventional template may be used in the ITMP search process. FIG. 9 illustrates an example of a conventional template for a vertical and horizontal flip case compared with a current block template. Non-flipped versions of the reference template may not match the current template. In some examples, (e.g., only) the left template may be used in case of a vertical flip. In some examples, (e.g., only) the top template may be used in case of a horizontal flip.

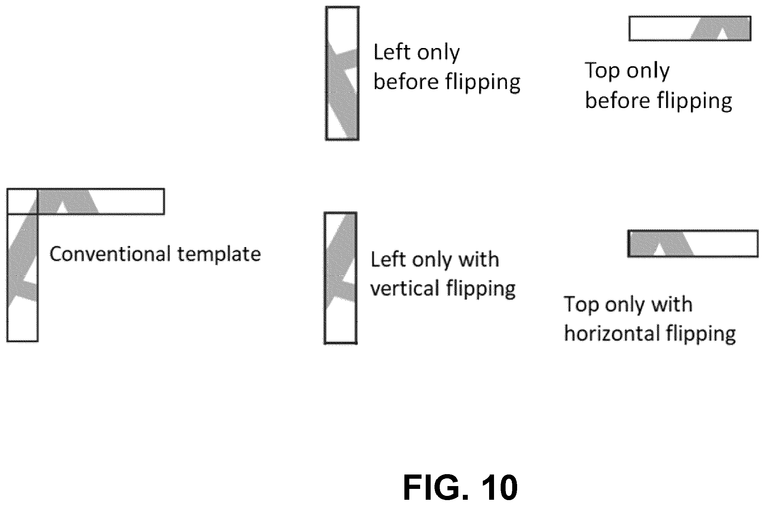

In some examples, appropriate flipping of the template may be applied, e.g., in addition to using only the left or top template. FIG. 10 illustrates an example of using left only and top only templates with application of appropriate flipping of the templates. In an example, before calculating a template matching cost, a top template may be flipped horizontally (e.g., in case of horizontal flip use), and/or a left template may be flipped vertically (e.g., in case of vertical flip use), which may lead to the situation illustrated in FIG. 10, where left only and top only templates with flipping are flipped versions of the templates illustrated in FIG. 9.

In an example, after appropriate flipping is applied to the left or top template, a left or top template may be matched (e.g., more accurately matched) with the current template. The template matching process may obtain better cost, and a more accurate template matching process may be performed, for example, compared to using a non-flipped and/or a full template.

In some examples, using full template may be inappropriate (e.g., even if the full template is flipped according to the flip RRIBC direction), for example, because the left template (e.g., in case of horizontal flip) or top template (e.g., in the case of vertical flip) may include different structural characteristics than the structural characteristics included in the template from the current block. The result may be higher cost and/or a possibility of dropping the current ITMP merge candidate during ITMP competition. The candidate may be discarded or not selected, for example, even if the candidate may give the best possible prediction when appropriate flipping is applied.

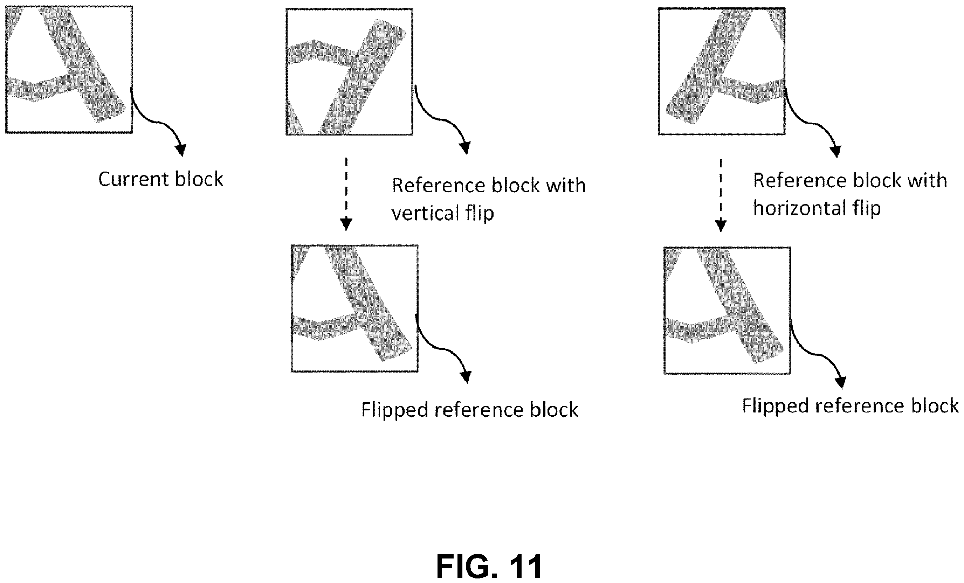

FIG. 11 illustrates an example of flipping a reference block to create a prediction. As illustrated in FIG. 11, flipping may (e.g., need to) be performed on the reference block in the process of creating the prediction block. The flipping of the reference block may be in the same direction as the flipping direction of the template, which may be indicated with a merged/inherited syntax element.

Management of the ITMP process may include using appropriate template cost calculation and reference block flipping, e.g., as described herein. Other encoder/decoder processes may continue as normal.

In some examples, modified template mechanism and filliping of a reference block or a template may be utilized. A modified template and flipping may be implemented. In some examples, a reference block with modified template may be used in the ITMP search process.

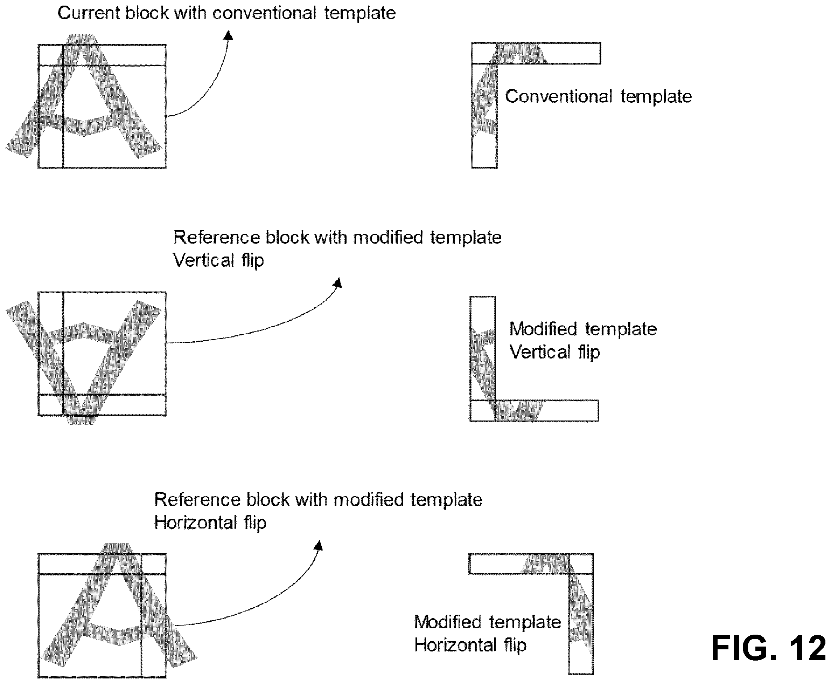

FIG. 12 Illustrates an example of using a modified template for vertical and horizontal flip cases. A modified template may be taken from the neighboring pixels of the reference block. As illustrated in FIG. 12, modified but non-flipped versions of the reference template may not match the current template, but structurally they may be similar. Therefore, in some examples, flipping of the reference template may be performed, e.g., before the template cost calculation.

As shown in FIG. 12, flipped versions of the reference template may structurally match the current template more closely. However, before calculating template cost, additional reassembling of the template may be performed. For example (e.g., in order have a precise process), a modified vertical template may be flipped vertically, and a horizontal template may be flipped horizontally.

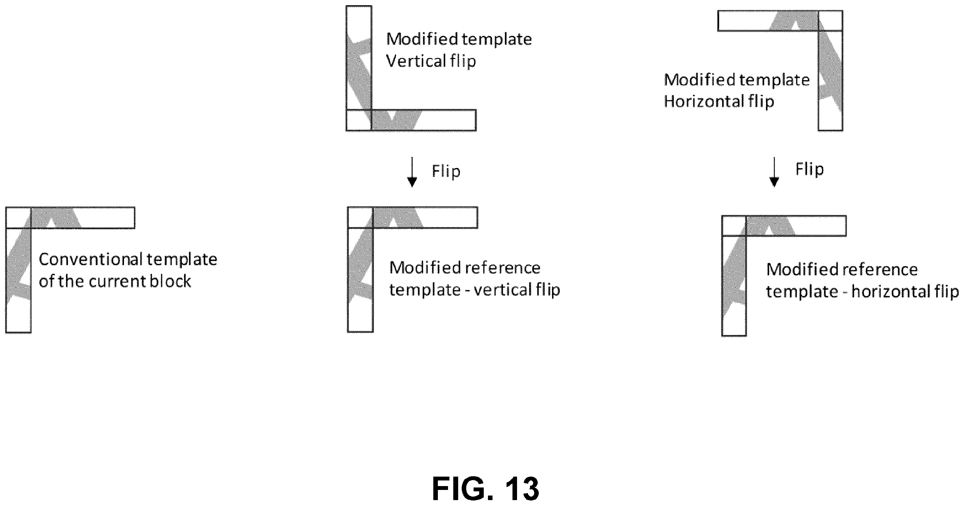

FIG. 13 illustrates an example of a modified template with vertical and horizontal flip. As illustrated in FIG. 13, templates created and managed in this way may structurally match the current template.

Template parts (e.g., all template parts) may be used in the template matching process (e.g., the left, top-left, and top template may be used). The template matching process may obtain a better cost, for example, by using a modified template and flipping. The template matching process may support performance of a more accurate template matching process, e.g., compared to conventional or non-flipped reference templates.

In some examples, flipping may (e.g., need to) be performed on the reference block in the process of creating the prediction block. The same flipping direction may be applied during template matching process. The flipping direction may be indicated, for example, with the syntax element fetched/inherited from the ITMP merge candidate block.

In some examples, flipping may be applied on the current block side. For example, a template and/or current image block may be flipped horizontally or vertically, e.g., depending on the RRIBC flip direction of the merge candidate block. The flipping direction may be indicated, for example, with the syntax element fetched/inherited from the ITMP merge candidate block.

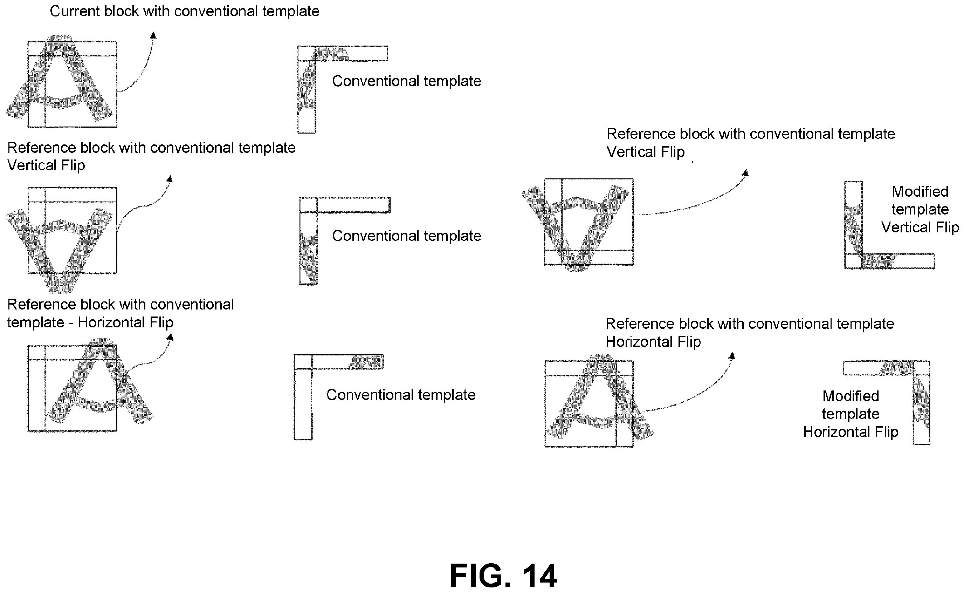

FIG. 14 illustrates an example of modified and conventional template use in case of flipping on the current block side. As illustrated in FIG. 14, a conventional template or modified template may be used on the reference block size, for example, without flipping (e.g., as noted, flipping may be done on the current block side).

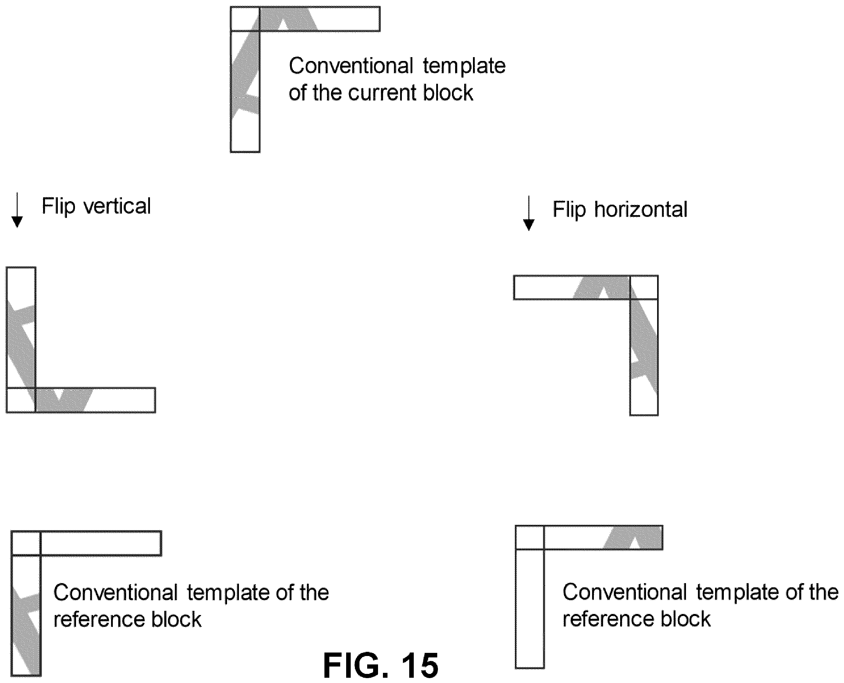

In some examples, a conventional template may be used on the reference side. FIG. 15 illustrates an example of template matching illustration when a current template is flipped and a conventional template may be used on the reference block side. After flipping, (e.g., only) the left or (e.g., only) the top template may be used in the template matching process and template matching cost calculation. Other template parts may be omitted, for example, because they may refer to the different structural parts of an image.

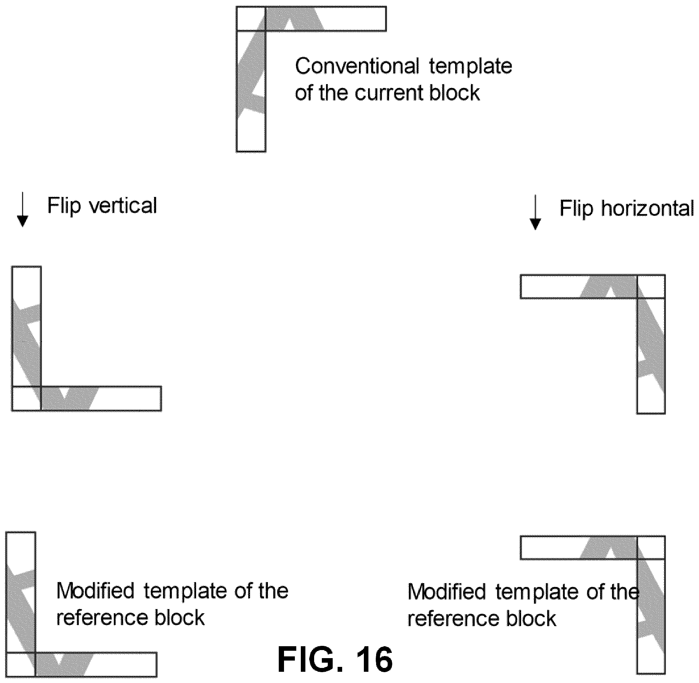

FIG. 16 illustrates an example of template matching when a current template is flipped and a modified template is used on the reference block side. As illustrated in FIG. 16, a modified template may be used on the reference block side, which may allow using (e.g., all) template parts in the template matching process and cost calculation. As may be observed in FIG. 16, a flipped template from the current block and a modified template from the reference block closely match. Hence, using appropriate flipping may lead to a better ITMP search process. As shown and described herein, ITMP candidates that are fetched from RRIBC blocks may be handled in a more precise way.

In some examples, flipping of the current image block may be applied. A reference block may be used as is and the current block may be flipped in accordance with the flip direction, e.g., before creating a residual signal. Flipping a current block may provide computational savings, for example, compared to flipping applied on a reference block. For example, flipping the current block may be performed only once and may be used for all reference blocks while flipping performed on the reference image block may result in flipping (e.g., all) reference blocks individually.

In some examples, flipping process may be applied at the refinement stage. For example, if a merge candidate is selected for the next phase (e.g., refinement is applied for that candidate), flipping procedure may be applied for (e.g., all) refined candidates as for the initial candidate, e.g. if initial candidate is RRIBC merge candidate. Each of the refined candidates may be tagged with the RRIBC syntax as the initial candidate, e.g. refined candidates may inherit RRIBC syntax from the initial candidate. In some examples, flipping process may be applied to each refined candidate.

In some examples, refinement may not be performed for an ITMP merge candidate fetched from the merge block coded with flipping mode, e.g., RRIBC mode.

Template cost may be normalized. In some examples, template cost may be normalized before comparing the template cost with other candidates, e.g., if/when only the left or only the top template is used (e.g., as explained herein). In some examples of normalization, the average cost per pixel may be calculated and then scaled by the total number of pixels within the full template. For example, the number of pixels in the partial template (e.g., top or left, depending on the flip direction) may be denoted as M. The total number of pixels in the full template may be denoted as N. The partial template cost may be denoted as J. The per pixel cost may be determined as follows:

$$J_p = J/M$$

The normalized cost may be determined as follows:

$$J_N = J_p * N$$

Normalized cost $J_N$ may be used then as an approximated cost of a full template. Normalized cost $J_N$ may be used in the ITMP candidate ranking process.

In some examples, a weighted normalized cost may be used. For example, $J_N$ may be expressed as a sum of the partial template cost J, $w_1*J$, and $w_2*J$, where $w_1$ and $w_2$ may be adjusted to compensate non-used template parts. For example, a total template cost may be determined as follows:

$$J_N = J + 1/4 * J + 1/4 * J$$

The total template cost may be simplified as follows:

$$J_N = J + (w_1 + w_2) * J$$

In some examples, an ITMP merge candidate may be tested with flipping applied and without flipping applied, e.g., regardless of whether the ITMP merge block candidate uses RRIBC mode, which may mean that there is no need to inherit the RRIBC mode from the neighboring blocks, e.g., because all variants are tested. For example, additional template matching tests may apply, e.g., test with vertical flip and test with horizontal flip, for an (e.g., one) ITMP merge candidate. Flip may be implemented in any way, e.g., as described in herein. Candidates may (e.g., then) be ranked among each other, for example, in a usual way, e.g., by comparing the template cost. For each ITMP merge candidate, a plurality of associated costs may be provided, e.g., one standard cost, one cost after horizontal flip, and one cost after vertical flip. If flip is tested, flip may be applied to the template during the template matching process and to the image block (e.g., current image block or reference image block, which may depend on the implementation, such as the different approaches for flipping the image block as explained herein). A syntax element may be used to signal used flipping mode to the decoder, e.g., no flipping, vertical flipping or horizontal flipping mode.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

**Claims**

1. A video decoder comprising:
   a processor configured for at least to:

   determine if a first neighboring coding unit (CU) is coded in a reconstruction-reordered intra block copy (RRIBC) mode;
   based on the determination that the neighboring CU is coded in the RRIBC mode, add an intra template matching prediction (ITMP) merge candidate associated with the first neighboring CU to a first ITMP merge candidate list;
   flip at least one of a template or a block associated with the added ITMP merge candidate, wherein the at least one of the template or the block is flipped using a flipping direction;
   generate a second ITMP candidate list, wherein the second ITMP candidate list is generated from the first ITMP merge candidate list and a sparse candidate list;
   refine the second ITMP candidate list;
   generate a third ITMP candidate list from the refined second ITMP candidate list;
   select an ITMP candidate from the third ITMP candidate list; and
   decode a current block using the selected ITMP candidate.

2. The video decoder of claim 1, wherein the processor being configured to determine if the first neighboring CU is coded in the RRIBC mode comprises the processor being configured to determine if the first neighboring CU is coded in the RRIBC mode based on an indicator associated with the first neighboring CU.

3. The video decoder of claim 1, wherein based on a determination that a second neighboring CU is coded in the RRIBC mode, the processor is further configured to exclude the second neighboring CU from being added to the ITMP merge candidate list.

4. The video decoder of claim 1, wherein the processor is further configured to:

   receive an indicator associated with the ITMP candidate; and
   wherein the processor being configured to select the ITMP candidate from the third ITMP candidate list comprises the processor being configured select the ITMP candidate from the third candidate ITMP list based on the received indicator.

5. The video decoder of claim 1, wherein the processor is further configured to apply the flipping direction to a refined block that is in the RRIBC mode.

6. The video decoder of claim 1, wherein the processor is configured to flip the at least one of the template or the block during template matching.

7. The video decoder of claim 1, wherein the processor is configured to rank the third ITMP candidate list comprising at least one of one or more flipped merge candidates or one or more non-flipped merge candidates.

8. A video decoding method comprising:

   determining if a first neighboring coding unit (CU) is coded in a reconstruction-reordered intra block copy (RRIBC) mode;
   based on the determination that the neighboring CU is coded in the RRIBC mode, adding an intra template matching prediction (ITMP) merge candidate associated with the first neighboring CU to a first ITMP merge candidate list;
   flipping at least one of a template or a block associated with the added ITMP merge candidate, wherein the at least one of the template or the block is flipped using a flipping direction;
   generating a second ITMP candidate list, wherein the second ITMP candidate list is generated from the first ITMP merge candidate list and a sparse candidate list;
   refining the second ITMP candidate list;
   generating a third ITMP candidate list from the refined second ITMP candidate list;
   selecting an ITMP candidate from the third ITMP candidate list; and
   decoding a current block using the selected ITMP candidate.

9.  The method of claim 8, further comprising determining if the first neighboring CU is coded in the RRIBC mode based on an indicator associated with the first neighboring CU.

10. The method of claim 8, wherein based on a determination that a second neighboring CU is coded in the RRIBC mode, further comprising excluding the second neighboring CU from being added to the ITMP merge candidate list.

11. The method of claim 8, further comprising:

    receiving an indicator associated with the ITMP candidate; and
    selecting the ITMP candidate from the third candidate ITMP list based on the received indicator.

12. The method of claim 8, further comprising applying the flipping direction to a refined block that is in the RRIBC mode.

13. The method of claim 8, further comprising flipping the at least one of the template or the block during template matching.

14. The method of claim 8, further comprising ranking the third ITMP candidate list comprising at least one of one or more flipped merge candidates or one or more non-flipped merge candidates.

15. The decoding device of claim 1 or the method of claim 9, wherein the block is a current block or a reference block, and wherein the template is associated with the current block or a reference block.

**FIG. 1A**

**FIG. 1B**

**FIG. 1C**

EP 4 629 624 A1

**FIG. 1D**

200

FIG. 2

300

Entropy Decoding 330

Partitioning 335

Inverse Quantization 340

Inverse Transform 350

355

Intra Prediction 360

370

In-loop Filters 365

Motion Compensation 375

Reference Picture Buffer 380

Post-decoding processing 385

**FIG. 3**

**FIG. 4**

FIG. 5

FIG. 6

**FIG. 7**

FIG. 8

Current block with conventional template

Conventional template

Reference block with conventional template
Vertical flip

Conventional template

Reference block with conventional template
Horizontal flip

Conventional template

**FIG. 9**

EP 4 629 624 A1

Left only before flipping

Top only before flipping

Conventional template

Left only with vertical flipping

Top only with horizontal flipping

**FIG. 10**

Current block

Reference block with vertical flip

Flipped reference block

Reference block with horizontal flip

Flipped reference block

**FIG. 11**

EP 4 629 624 A1

Current block with conventional template

Conventional template

Reference block with modified template
Vertical flip

Modified template
Vertical flip

Reference block with modified template
Horizontal flip

Modified template
Horizontal flip

**FIG. 12**

EP 4 629 624 A1

Conventional template of the current block

Modified template Vertical flip

↓ Flip

Modified reference template - vertical flip

Modified template Horizontal flip

↓ Flip

Modified reference template - horizontal flip

**FIG. 13**

EP 4 629 624 A1

FIG. 14

Conventional template
of the current block

Flip vertical

Flip horizontal

Conventional template of the
reference block

Conventional template of the
reference block

**FIG. 15**

EP 4 629 624 A1

FIG. 16

## EUROPEAN SEARCH REPORT

**Application Number**

EP 24 30 5522

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/008021 A1 (BEIJING BYTEDANCE NETWORK TECH CO LTD [CN]; BYTEDANCE INC [US]) 11 January 2024 (2024-01-11) * page 26 - page 29 * * page 47 - page 62 * ----- | 1-11,14, 15 | INV. H04N19/11 H04N19/176 H04N19/52 H04N19/593 |
| X | RUIZ COLL (OFINNO) D ET AL: "EE2-3.1: TMP using Reconstruction-Reordered for screen content coding (RR-TMP)", 30. JVET MEETING; 20230421 - 20230428; ANTALYA; (THE JOINT VIDEO EXPLORATION TEAM OF ISO/IEC JTC1/SC29/WG11 AND ITU-T SG.16 ),, [Online] no. JVET-AD0171 ; m62837, 14 April 2023 (2023-04-14), XP030308893, Retrieved from the Internet: URL:https://jvet-experts.org/doc_end_user/ documents/30_Antalya/wg11/JVET-AD0171-v1.z ip JVET-AD0171-v1/JVET-AD0171-v1.docx> [retrieved on 2023-04-14] * page 1 - page 2 * ----- | 1-15 | |
| X | COBAN M ET AL: "Algorithm description of Enhanced Compression Model 8 (ECM 8)", 141. MPEG MEETING; 20230116 - 20230120; ONLINE; (MOTION PICTURE EXPERT GROUP OR ISO/IEC JTC1/SC29/WG11), , no. m62440 ; JVET-AC2025 6 April 2023 (2023-04-06), XP030308550, Retrieved from the Internet: URL:https://dms.mpeg.expert/doc_end_user/d ocuments/141_Teleconference/wg11/m62440-JV ET-AC2025-v1-JVET-AC2025.zip JVET-AC2025-v1.docx [retrieved on 2023-04-06] * Sections 3.2.14, 3.2.25, 3.2.33 * ----- | 1,4,7,8, 11,14 | TECHNICAL FIELDS SEARCHED (IPC) H04N |

The present search report has been drawn up for all claims

| Place of search | Date of completion of the search | Examiner |
|---|---|---|
| Munich | 26 August 2024 | Vaquero, Raquel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 5522

This annex lists the patent family members relating to the patent documents cited in the above-mentioned European search report.
The members are as contained in the European Patent Office EDP file on
The European Patent Office is in no way liable for these particulars which are merely given for the purpose of information.

26-08-2024

| Patent document cited in search report | Publication date | Patent family member(s) | Publication date |
|---|---|---|---|
| WO 2024008021 A1 | 11-01-2024 | NONE | |

For more details about this annex : see Official Journal of the European Patent Office, No. 12/82